# EUROPEAN PATENT SPECIFICATION

(11) **EP 4 328 115 B1**
(45) Date of publication and mention of the grant of the patent: **21.10.2026**
(21) Application number: 23184203.0
(22) Date of filing: 07.07.2023
(51) Int. Cl.: B62D 5/04, B62D 7/08

(54) **STEERING ASSEMBLY FOR SELF-PROPELLED WORKS VEHICLES**
LENKANORDNUNG FÜR SELBSTFAHRENDE ARBEITSFAHRZEUGE
ENSEMBLE DE DIRECTION POUR VÉHICULES DE TRAVAUX AUTOMOTEURS

(30) Priority: 04.08.2022 IT 202200016611
(43) Date of publication of application: 28.02.2024
(73) Proprietor: O.M.C.I. - Officine Metalmeccaniche Costruzioni Industriali - Societa' Per Azioni, 41013 Castelfranco Emilia, Frazione Cavazzona (MO) (IT)
(72) Inventor: FONTANINI, Claudio, 54100 MASSA (IT); MAGNI, Giorgio, 41124 MODENA (IT)
(74) Representative: Modiano, Micaela Nadia

(56) References cited:
- EP-A1- 3 093 216
- JP-A- 2009 101 858
- JP-A- 2011 131 777
- US-A1- 2020 070 885
- US-A1- 2020 317 256

## Description

The present invention relates to a steering assembly for self-propelled works vehicles or operating machines and to the corresponding vehicle.

As is known, the axle is a common element of vehicles and works vehicles in particular, which is entrusted with the task of connecting a pair of wheels, transferring to them the load that bears on the vehicle of which it is a part.

Fixed axles, in which rotation about the horizontal axis they form is the only degree of freedom allowed to the wheels, and steered-wheel axles, are also widespread in this context. In the latter type, the wheels have a second degree of freedom with respect to the axle, which allows them, with respect to said axle, to rotate about a vertical axis (perpendicular to the resting surface or the ground) in order to allow the vehicle or works vehicle to steer.

In some cases, the second degree of freedom is achieved by means of two gearmotors, connected to vertical pivots interposed between the axle and each wheel: thus, the rotation of each wheel about the vertical axis of the pivot can be commanded in a mutually independent manner, and then be synchronized in various ways with the steering of the other one.

In particular, in some less complex solutions, a simple bar for coupling between the two wheels is used, but this is not suitable in medium- and large-capacity axles, such as those mounted on self-propelled works vehicles, where in particular steering angles greater than 90° (where the solutions just mentioned are wholly inadequate) are to be controlled effectively. In such cases, therefore, which find application on cranes, telescopic handlers, forklifts and other large vehicles assigned to the movement of materials, a solution is known in which synchronization is entrusted solely to two encoders, which control the steering angles of the two wheels, sending the acquired information to software which processes the received data and is able to control the gearmotors so as to correct any errors.

However, this is a solution that has now proven itself to be affected by drawbacks that are not easy to solve, both because tuning is often complex and not without limitations and because it has been found to be inadequately reliable for circulation on public roads.

EP 3 093 216 A1 discloses a steering assembly according to the preamble of claim 1.

The aim of the present invention is to solve the above problems by providing an assembly that ensures optimal synchronization of its steered wheels for self-propelled works vehicles.

Within this aim, an object of the invention is to provide a self-propelled works vehicle equipped with a steering assembly capable of ensuring optimal synchronization of the steered wheels mounted on the same axle.

Another object of the invention is to provide a steering assembly that is effective in synchronizing the two steered wheels for medium- and large-capacity axles.

Another object of the invention is to provide a steering assembly that is effective in synchronizing the two steered wheels even at steering angles greater than 90°.

Another object of the invention is to provide an assembly and a machine that ensure high reliability in operation.

Another object of the invention is to provide an assembly and a machine that adopt a technical and structural architecture that is alternative to those of the solutions of the known type.

Not least object of the invention is to provide an assembly and a works vehicle that are easily obtainable starting from commonly commercially available elements and materials.

Still another object of the invention is to provide an assembly and works vehicle having low costs and of assured application.

This aim and these and other objects which will become better apparent hereinafter are achieved by an assembly according to claim 1 and by a self-propelled works vehicle according to claim 10.

Further characteristics and advantages of the invention will become better apparent from the description of a preferred but not exclusive embodiment of the assembly and the machine according to the invention, illustrated by way of non-limiting example in the accompanying drawings, wherein:
Figure 1 is a perspective view, from the front and from below, of the assembly according to the invention;
Figure 2 is a perspective view, from the rear and from above, of the assembly of Figure 1;
Figure 3 is a view from below of the assembly of Figure 1;
Figure 4 is a view of the assembly of Figure 1 assembly, taken from below as in Figure 3, but in a different arrangement of the wheels and of the synchronization apparatus;
Figure 5 is a perspective view of some components of the assembly of Figure 1;
Figure 6 is a perspective view, from the front and from the right, of the self-propelled works vehicle according to the invention;
Figure 7 is a perspective view, from the front and from the left, of the self-propelled works vehicle of Figure 6;
Figure 8 is a perspective view, from the rear and from the right, of the self-propelled works vehicle of Figure 6;
Figure 9 is a perspective view, from the rear and from the left, of the self-propelled works vehicle of Figure 6.

With particular reference to the figures, a steering assembly of self-propelled works vehicles 100 is generally designated by the reference numeral 1.

It is emphasized at the outset that the protective scope claimed herein relates first of all to the assembly 1, understood as a set of components installed or installable on a works vehicle 100, and possibly supplied independently of the works vehicle 100 (although typically the assembly 1 will be installed on the works vehicle 100 during its outfitting).

At the same time, a works vehicle 100 provided with the assembly 1 constitutes the subject matter of the protection claimed herein.

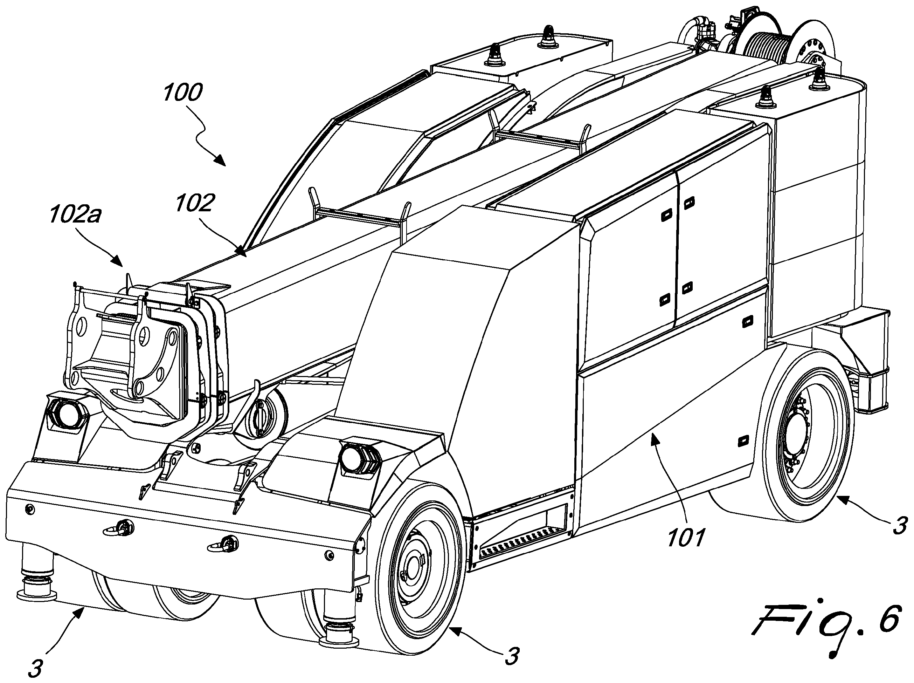

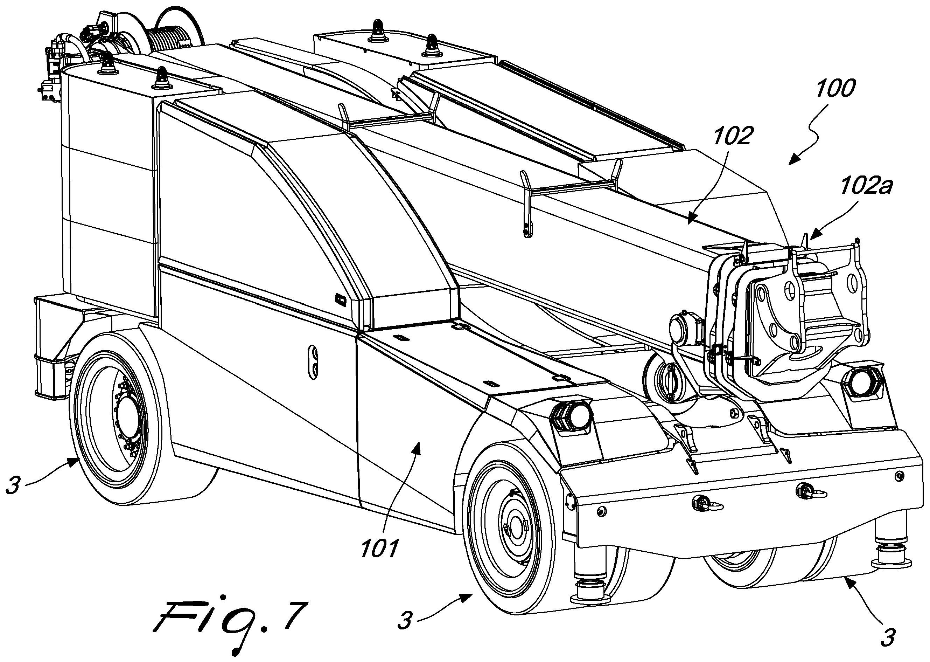

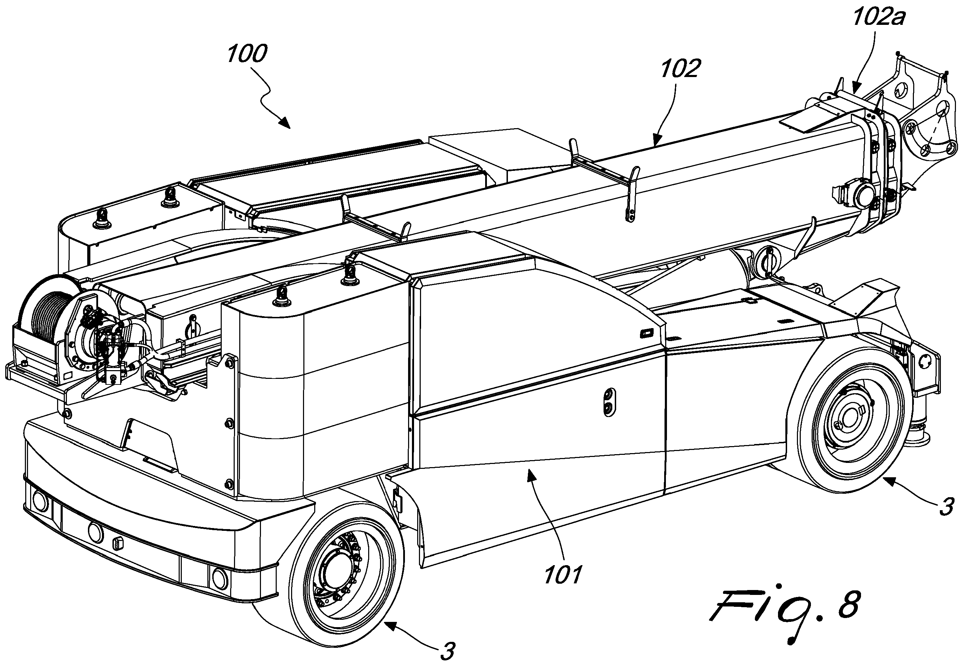

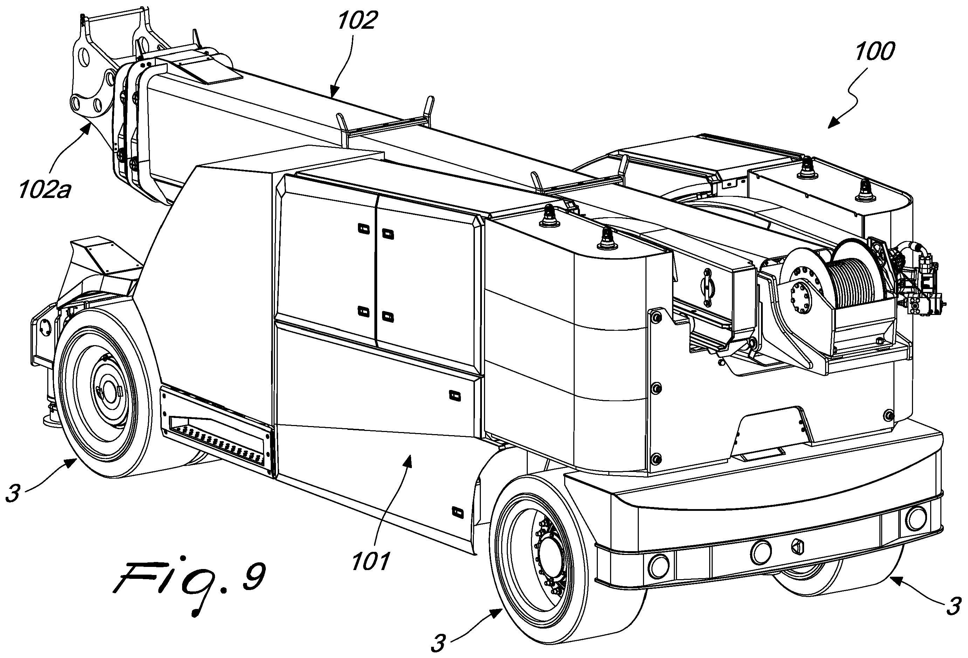

Within this scope, the works vehicle 100 may be of any type, and in particular in the preferred application it is designed for the movement of materials: it may be, for example, a crane, a telescopic handler, a forklift, or the like. In the accompanying Figures 6-9, the works vehicle 100 is a telescopic handler, therefore equipped with a vehicle 101 or truck which supports a telescopic arm 102 which can rotate about a horizontal axis. According to per se known methods, the arm 102 is equipped with two or more segments which are arranged in series and are mutually extractable (sometimes called, in fact, "extensions"): the arm 102 can thus be actuated to bring an accessory, coupled to a free end portion 102a thereof, to the point of interest, to carry out operations of various kinds.

In any case, for all the aspects not covered in detail in this description, any construction details relating to the works vehicle 100 (and the vehicle 101) may be of a known type. In particular, therefore, the person skilled in the art may choose in each instance the outfitting and the embodiment deemed most appropriate based on common expertise in the field and as a function of the specific requirements, without, however, abandoning the protective scope claimed herein.

It is also reiterated that the protective scope claimed herein extends to any type of self-propelled works vehicle 100.

Thus, the assembly 1 comprises, first of all, an axle 2 that can be connected in various ways to the chassis of the works vehicle 100: the ways in which this connection is provided can be chosen of a known types and therefore are not discussed in the present description.

Moreover, the assembly 1 comprises a pair of steered wheels 3, which are coupled to axle 2 with the possibility of rotation about the longitudinal axis A of the axle 2 and about respective steering axes B, which are perpendicular to the longitudinal axis A.

In an entirely obvious and per se known manner, rotation about the longitudinal axis A allows the works vehicle 100 to move forward on the ground along the direction of travel, while rotation about the steering axes B allows the works vehicle 100 to vary the direction of travel (indeed to "steer").

Moreover, the assembly 1 comprises means 4 for the movement of the wheels 3, which are configured to actuate in a mutually independent manner the rotation of each wheel 3 about the respective steering axis B.

In addition, the assembly 1 comprises an apparatus 5 for synchronizing the rotation of the wheels 3 about their respective steering axes B: in fact, as seen above, the wheels 3 are rotated about said axes (by the means 4) in a mutually independent manner, and the apparatus 5 ensures that the rotation imposed on one wheel 3 is matched by a rotation of equal extent of the other wheel 3 associated with the same axle 2.

According to the invention, the apparatus 5 first of all comprises at least two cranks 6 (preferably of the same shape and dimensions) which rotate integrally with respective wheels 3 about the corresponding steering axes B.

Moreover, according to the invention the apparatus 5 comprises at least one slider 7 that is slidingly movable (with a preferably rectilinear translational motion) along a guiding track 8, applied (rigidly) to the axle 2.

Moreover, according to the invention the apparatus 5 comprises at least two linkages 9 (preferably of the same shape and dimensions), which are interposed between the slider 7 and respective cranks 6.

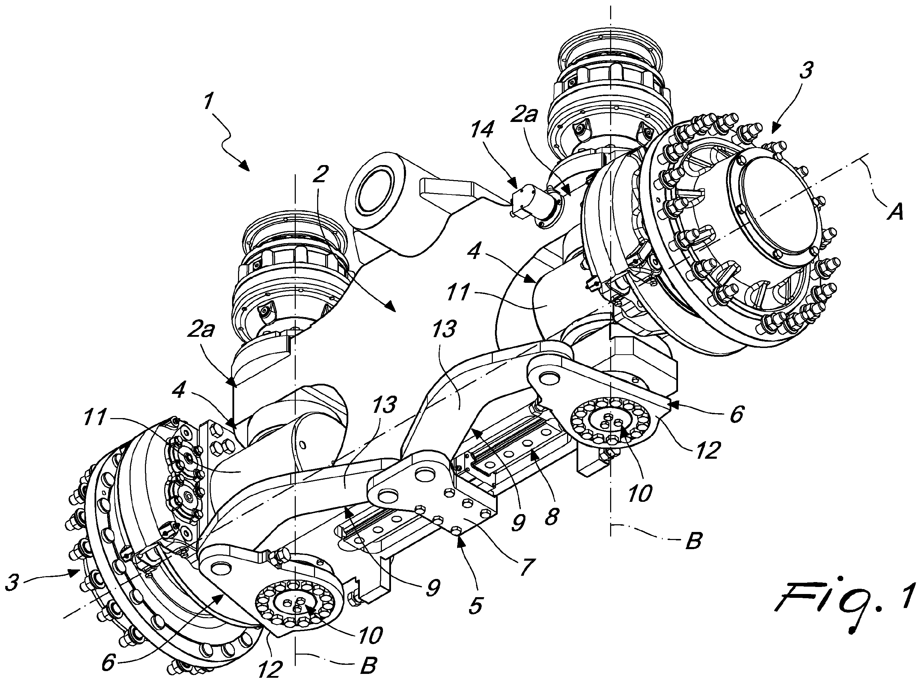

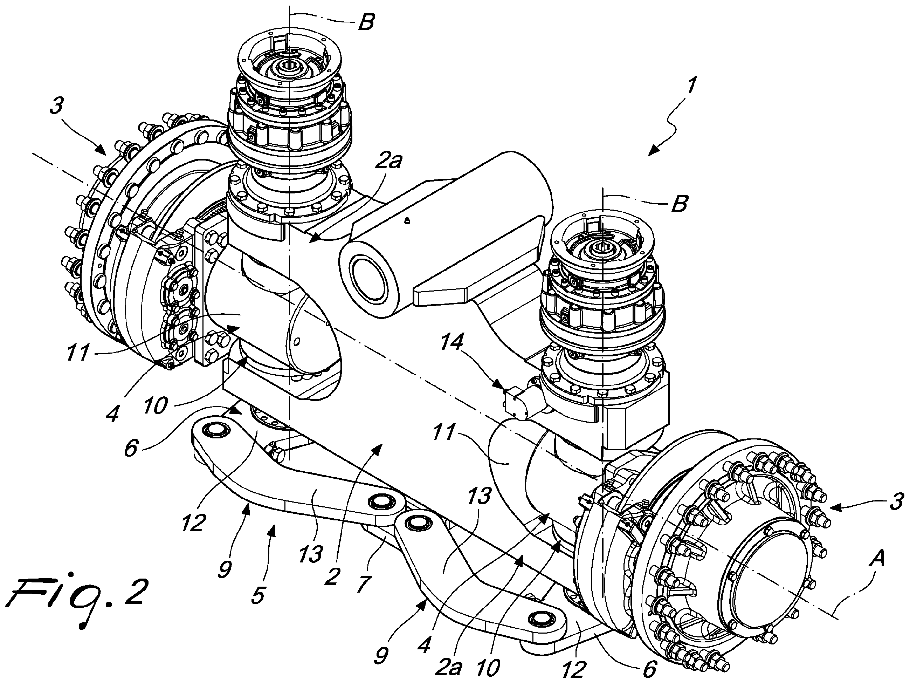

When the wheels 3 are arranged so as to impose a direction of travel that is perpendicular to the longitudinal axis A (as in Figures 1-3), the slider 7 is preferably arranged equidistantly from the cranks 6 and the steering axes B.

In practice, therefore, the cranks 6, the slider 7, the track 8 and the linkages 9 compose a kinematic system which connects the wheels 3 in a completely unique and innovative way: a rotation of one of the wheels 3 about the respective steering axis B, actuated by the means 4, corresponds to an integral rotation of the corresponding crank 6, which displaces the associated linkage 9, which in turn causes the slider 7 to slide along the track 8, with consequent displacement of the other linkage 9 and of the other crank 6, which thus causes the other wheel 3 to rotate by the same extent about the respective steering axis B.

The intended aim has thus been achieved already.

In particular, in the embodiment shown in the accompanying figures, by way of non-limiting example of the application of the invention, the slider 7 is smoothly guided by the track 8 along a direction which is parallel to the longitudinal axis A.

In the preferred embodiment, which in any case is non-limiting for the application of the invention, the assembly 1 comprises two articulation pivots 10, which are arranged along respective steering axes B (i.e., the steering axes B coincide with their longitudinal axes of symmetry) and are integral with corresponding wheels 3 (they may be fused with them). Each pivot 10 is rotatably coupled to a respective end 2a of the axle 2 with the possibility of rotation about the corresponding steering axis B.

Each pivot 10 thus allows the aforementioned degree of freedom of rotation, about the steering axis B, of each wheel 3 with respect to the axle 2.

In the accompanying figures, illustrated by way of non-limiting example, the axle 2 is contoured as a central body from which the two forkshaped ends 2a extend: the track 8 is applied to the bottom of the central body, while each pivot 10 is articulated to the two prongs formed by the respective end 2a.

With further reference to the preferred, non-exclusive embodiment, the means 4 comprise two gearmotors 11, configured to actuate the mutually independent rotation of each wheel 3 (and therefore of the corresponding pivot 10) about the respective steering axis B.

In an embodiment of considerable practical interest, which however does not limit the application of the invention, the cranks 6 comprise (or are constituted by) respective contoured plates 12, having the same dimensions and shape and anchored to corresponding pivots 10 (they may be keyed to them, for example).

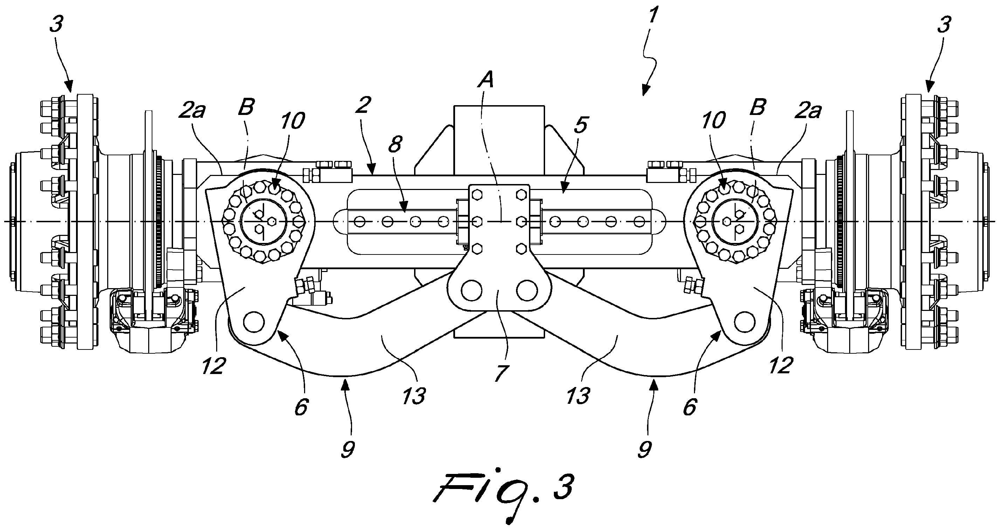

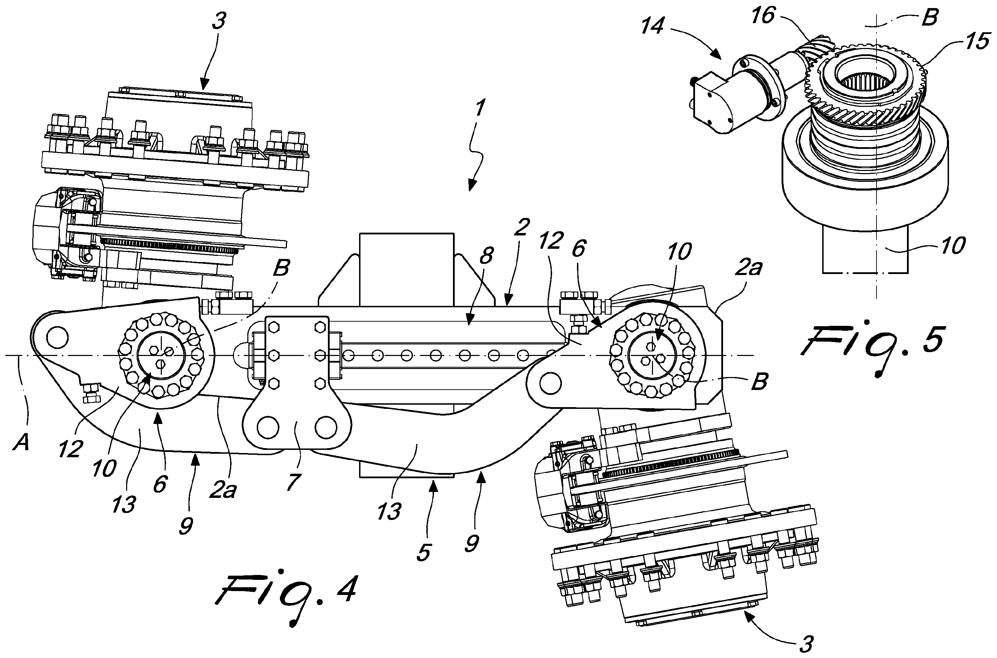

The plates 12 can assume any shape, as a function of the specific requirements, and for example, with reference to the accompanying figures (Figures 3 and 4 in particular), they can have a substantially triangular plan shape, with the point of articulation to the respective linkage 9 proximate to the vertex interposed between the long sides and with a rounded short side, so as to follow the shape of a through slot provided in said plate 12, to accommodate the pivot 10 (or other component) to which it is anchored, for its integral rotation with the corresponding wheel 3.

In the embodiment of the accompanying figures, which is non-limiting for the invention, the linkages 9 comprise (or are constituted by) respective arms 13 bent into a "V"-shape, having the same dimensions and shape and being rotatably coupled by means of respective end portions to the slider 7 (at one end) and to a corresponding crank 6 (at the other end).

It is not excluded to give another shape to the linkages 9, as a function of the specific requirements.

In the embodiment illustrated in the accompanying figures (which, it should be reiterated, should in no way be understood as limiting the application of the invention), the track 8 is a linear roller guide.

Advantageously, the assembly 1 comprises an encoder 14 (which is the subject in particular of Figure 5), preferably but not necessarily of the rotary type, which is configured to acquire a data item related to the angular position assumed instant by instant by one of the wheels 3, with respect to the corresponding steering axis B. The information related to the angular position of one wheel 3 (and therefore also of the other wheel, by virtue of the synchronization ensured by apparatus 5) can be managed or used in various ways, for example to visualize on an interface of various types (a display or a video camera) the travel trajectory (forward or reverse) at that moment imposed on the works vehicle 100, due precisely to the rotation imposed on the wheels 3 with respect to the steering axes B. Thus, the information regarding the position of the steered wheels 3 during any maneuver is made available to the operator, in a practical and easy way.

In particular, in one embodiment of considerable practical interest, which however does not limit the invention, the assembly 1 comprises a first toothed element 15 (Figure 5), which rotates integrally with the respective wheel 3 about the corresponding steering axis B. For example, the first element 15 may be a helical ring gear which is coaxial and integral with the pivot 10, or even simply a set of teeth provided along an axial portion of said pivot 10.

The encoder 14 then comprises a second toothed element 16 that meshes with the first toothed element 15, and the transmission ratio between the angular velocity of the first toothed element 15, which is driving, and the angular velocity of the second toothed element 16, which is driven, is greater than one. The terms "driving" and "driven" are used here in accordance with industry practice: thus, the first element 15 is the one that entrains the second element 16 in rotation.

The second element 16 may be for example, as in Figure 5, a worm screw, the rotation of which is indeed what is converted into a digital signal by the encoder 14.

The gear ratio is chosen greater than one and preferably very large, for example in a range comprised between 4 and 10 and even more preferably equal to 5, since this allows for a high extent of rotation on the second toothed element 16 even in case of low-extent rotations on the first toothed element 15 (with the latter corresponding to the rotations of wheel 3). Thus, the multiplication factor allows even small rotations of wheel 3 to be detected and measured accurately.

As already noted, in addition to the assembly 1 the subject matter of the present description (and of the protection claimed herein) is also a self-propelled works vehicle 100, comprising a chassis and, according to the invention, an assembly 1 provided with the particularities described in the preceding paragraphs (coupled indeed to the chassis).

The operation of the assembly and of the machine according to the invention is evident from what has been described so far.

The assembly 1 can be mounted on any self-propelled works vehicle 100 (for one or more of its axles 2), finding in particular a possible application on materials handling machines. In this context, therefore, the assembly 1 comprises two wheels 3 which are connected to an axle 2 and are steered in a mutually independent manner: said axle 2 may be the rear and/or front one and the wheels 3 may be driven or not, as a function of the specific requirements and without abandoning the protective scope claimed herein.

In an entirely innovative and peculiar way, the apparatus 5 ensures optimal synchronization of the steering angles of the two wheels 3 (the extent of rotation about their respective steering axes B) by virtue of the particular kinematic system that it comprises. In fact, as shown, the apparatus 5 comprises two cranks 6 which rotate about the steering axes B integrally with (the pivots 10 and) the wheels 3; the cranks 6 are mechanically connected, by means of two linkages 9, to a slider 7 which moves along a track 8 mounted on the axle 2, preferably along a direction that is parallel to the longitudinal axis A.

The mechanical connection thus provided between the wheels 3 is a guarantee of optimal synchronization between them, and thus the invention provides assurance of the correct trajectory of the works vehicle 100 in motion, avoiding the risk of having one wheel 3 moving one way and the other wheel 3 (mounted on the same axle 2) going another way.

It has been found in practice that the assembly 1 and the works vehicle 100 according to the invention fully achieve the intended aim, since the apparatus 5 ensures optimal synchronization of the steered wheels 3 mounted on the same axle 2.

The operational linkage is tough and reliable, thus making the invention particularly suitable also for road travel and for medium- and large-capacity axles 2, even in case of steering angles greater than 90° (such as those required for transition from the arrangement of Figure 3 to the one of Figure 4).

Therefore, it is not necessary to assign steering control to two encoders that send the position of the two wheels to software, which is in turn assigned to correcting errors, as is the case in known solutions. In the assembly 1 according to the invention, a single encoder 14 can be employed which monitors a single wheel 3 (the angular position of the latter with respect to the steering axis B corresponding to the angular position of the other, by virtue of the optimal synchronization performed by the apparatus 5) and provides the data item for other purposes, for example to know precisely the direction of travel of the works vehicle 100 (indeed without having to provide for additional systems).

Moreover, it is emphasized that the track 8 is preferably applied to the bottom of the axle 2, as in the accompanying figures, and with the cranks 6 and the linkages 9 which in turn are arranged below the track 8: this allows to mount the apparatus 5 in an area that is normally clear of other components, without therefore having to worry about solving problems of space occupation or placement, with respect to the traditional configuration of the components that are present.

Moreover, this allows to equip works vehicles that are otherwise traditional with the assembly 1, or at any rate already circulating, simply by having to provide for quick and simple setup operations.

The simplicity of the above embodiment, which makes use of a kinematic system that can in fact be provided and installed easily, is a guarantee of the reliability and cost-effectiveness of the invention.

The invention thus conceived is susceptible of numerous modifications and variations, as long as they fall within the scope of the appended claims; all the details may furthermore be replaced with other technically equivalent elements.

In the embodiments shown, individual characteristics, given in relation to specific examples, may actually be replaced with other different characteristics that exist in other embodiments as long as they fall within the scope of the claims. .

In practice, the materials used, as well as the dimensions, may be any according to the requirements and the state of the art.

This application claims priority from the Italian Patent Application No. 102022000016611.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A steering assembly for self-propelled works vehicles, comprising
- an axle (2) which can be connected to a chassis of a self-propelled works vehicle (100),
- a pair of steered wheels (3), which are coupled to said axle (2) with the possibility to rotate about the longitudinal axis (A) of said axle (2) and about respective steering axes (B) which are perpendicular to said longitudinal axis (A),
- means (4) for the movement of said wheels (3), which are configured for the mutually independent actuation of the rotation of each said wheel (3) about the respective said steering axis (B),
- an apparatus (5) for the synchronization of the rotation of said wheels (3) about the respective said steering axes (B),
**characterized in that** said apparatus (5) comprises:
- two cranks (6) which rotate integrally with respective said wheels (3) about the corresponding said steering axes (B),
- a slider (7) which can move slidingly along a guiding track (8), applied to said axle (2),
- two linkages (9), which are interposed between said slider (7) and respective said cranks (6).

2. The assembly according to claim 1, **characterized in that** said slider (7) is guided slidingly by said track (8) along a direction that is parallel to said longitudinal axis (A).

3. The assembly according to claim 1 or 2, **characterized in that** it comprises two articulation pivots (10), which are arranged along respective said steering axes (B) and are integral with corresponding said wheels (3), each one of said pivots (10) being coupled rotatably to a respective end (2a) of said axle (2) with the possibility to rotate about the corresponding said steering axis (B).

4. The assembly according to one or more of the preceding claims, **characterized in that** said means (4) comprise two gearmotors (11), configured to actuate the mutually independent rotation of each said wheel (3) about the respective said steering axis (B).

5. The assembly according to claim 3, **characterized in that** said cranks (6) comprise respective contoured plates (12), which have the same dimensions and shape and are anchored to corresponding said pivots (10).

6. The assembly according to one or more of the preceding claims, **characterized in that** said linkages (9) comprise respective arms (13) which are bent into a V-shape, have the same dimensions and shape, and are coupled rotatably, by means of respective terminal portions, to said slider (7) and to a corresponding said crank (6).

7. The assembly according to one or more of the preceding claims, **characterized in that** said track (8) is a linear roller guide.

8. The assembly according to one or more of the preceding claims, **characterized in that** it comprises an encoder (14), configured for the acquisition of a data item related to the angular position assumed instant by instant by one of said wheels (3) with respect to the corresponding said steering axis (B).

9. The assembly according to claim 8, **characterized in that** it comprises a first toothed element (15), which rotates integrally with the respective said wheel (3) about the corresponding said steering axis (B), said encoder (14) comprising a second toothed element (16) which meshes with said first toothed element (15), the transmission ratio between the angular velocity of said first toothed element (15), which is driving, and the angular velocity of said second toothed element (16), which is driven, being greater than one.

10. A self-propelled works vehicle, comprising at least one chassis, **characterized in that** it comprises an assembly (1) according to one or more of the preceding claims.

## Patentansprüche

1. Eine Lenkanordnung für selbstfahrende Arbeitsfahrzeuge, die Folgendes umfasst:
- eine Achse (2), die mit einem Fahrgestell eines selbstfahrenden Arbeitsfahrzeugs (100) verbunden werden kann,
- ein Paar gelenkter Räder (3), die mit der Achse (2) gekoppelt sind, mit der Möglichkeit, sich um die Längsachse (A) der Achse (2) und um entsprechende Lenkachsen (B) zu drehen, die senkrecht zu der Längsachse (A) sind,
- Mittel (4) zum Bewegen der Räder (3), die ausgebildet sind für den voneinander unabhängigen Antrieb der Rotation jedes Rades (3) um die entsprechende Lenkachse (B),
- eine Vorrichtung (5) zum Synchronisieren der Rotation der Räder (3) um die entsprechenden Lenkachsen (B);
**dadurch gekennzeichnet, dass** die Vorrichtung (5) Folgendes umfasst:
- zwei Kurbeln (6), die sich integral mit den entsprechenden Rädern (3) um die entsprechenden Lenkachsen (B) drehen,
- einen Schieber (7), der sich gleitend entlang einer Führungsschiene (8) bewegen kann, die an der Achse (2) angebracht ist,
- zwei Gestänge (9), die zwischen dem Schieber (7) und den entsprechenden Kurbeln (6) angeordnet sind.

2. Die Anordnung gemäß Anspruch 1, **dadurch gekennzeichnet, dass** der Schieber (7) gleitend von der Schiene (8) in einer Richtung geführt wird, die parallel zu der Längsachse (A) ist.

3. Die Anordnung gemäß Anspruch 1 oder 2, **dadurch gekennzeichnet, dass** sie zwei Gelenkzapfen (10) umfasst, die entlang den entsprechenden Lenkachsen (B) angeordnet und integral mit den entsprechenden Rädern (3) sind, wobei jeder der Gelenkzapfen (10) drehbar mit einem jeweiligen Ende (2a) der Achse (2) gekoppelt ist, mit der Möglichkeit, sich um die entsprechende Lenkachse (B) zu drehen.

4. Die Anordnung gemäß einem oder mehreren der obigen Ansprüche, **dadurch gekennzeichnet, dass** die Mittel (4) zwei Getriebemotoren (11) umfassen, ausgebildet, um die voneinander unabhängige Drehung jedes Rades (3) um die jeweilige Lenkachse (B) anzutreiben.

5. Die Anordnung gemäß Anspruch 3, **dadurch gekennzeichnet, dass** die Kurbeln (6) dazugehörige konturierte Platten (12) umfassen, die dieselben Abmessungen und dieselbe Form haben und an den entsprechenden Gelenkzapfen (10) verankert sind.

6. Die Anordnung gemäß einem oder mehreren der obigen Ansprüche, **dadurch gekennzeichnet, dass** die Gestänge (9) dazugehörige Arme (13) umfassen, die in eine V-Form gebogen sind, dieselben Abmessungen und dieselbe Form haben und über jeweilige Endabschnitte drehbar mit dem Schieber (7) und mit einer entsprechenden Kurbel (6) gekoppelt sind.

7. Die Anordnung gemäß einem oder mehreren der obigen Ansprüche, **dadurch gekennzeichnet, dass** die Schiene (8) eine Linear-Rollenführung ist.

8. Die Anordnung gemäß einem oder mehreren der obigen Ansprüche, **dadurch gekennzeichnet, dass** sie einen Codierer (14) umfasst, konfiguriert für die Erfassung eines Datenelements in Bezug auf die Winkelposition, die zu jedem Zeitpunkt von einem der Räder (3) mit Bezug auf die entsprechende Lenkachse (B) eingenommen wird.

9. Die Anordnung gemäß Anspruch 8, **dadurch gekennzeichnet, dass** sie ein erstes gezahntes Element (15) umfasst, das sich integral mit dem jeweiligen Rad (3) um die entsprechende Lenkachse (B) dreht, wobei der Codierer (14) ein zweites gezahntes Element (16) umfasst, welches in das erste gezahnte Element (15) eingreift; wobei das Übersetzungsverhältnis zwischen der Winkelgeschwindigkeit des ersten gezahnten Elements (15), welches antreibt, und der Winkelgeschwindigkeit des zweiten gezahnten Elements (16), welches angetrieben wird, größer als eins ist.

10. Ein selbstfahrendes Arbeitsfahrzeug, das mindestens ein Fahrgestell umfasst, **dadurch gekennzeichnet, dass** es eine Anordnung (1) gemäß einem oder mehreren der obigen Ansprüche umfasst.

## Revendications

1. Ensemble de direction pour véhicules de travaux automoteurs, comprenant
- un essieu (2) pouvant être relié à un châssis d'un véhicule de travaux automoteur (100),
- une paire de roues directrices (3), qui sont couplées audit essieu (2) de manière à pouvoir tourner autour de l'axe longitudinal (A) dudit essieu (2) et autour d'axes de direction respectifs (B) perpendiculaires audit axe longitudinal (A),
- des moyens (4) pour le déplacement desdites roues (3), qui sont configurés pour l'actionnement mutuellement indépendant de la rotation de chacune desdites roues (3) autour de l'axe de direction respectif (B),
- un dispositif (5) destiné à la synchronisation de la rotation desdites roues (3) autour desdits axes de direction respectifs (B),
**caractérisé en ce que** ledit dispositif (5) comprend :
- deux manivelles (6) qui tournent solidairement avec lesdites roues respectives (3) autour desdits axes de direction correspondants (B),
- un coulisseau (7) pouvant se déplacer par glissement le long d'une glissière de guidage (8), appliquée audit essieu (2),
- deux tringleries (9), interposées entre ledit coulisseau (7) et lesdites manivelles respectives (6).

2. L'ensemble selon la revendication 1, **caractérisé en ce que** ledit coulisseau (7) est guidé par glissement par ladite glissière (8) selon une direction parallèle audit axe longitudinal (A).

3. L'ensemble selon la revendication 1 ou 2, **caractérisé en ce qu'**il comprend deux pivots d'articulation (10), qui sont disposés le long desdits axes de direction (B) respectifs et sont solidaires desdites roues (3) correspondantes, chacun desdits pivots (10) étant couplé de manière rotative à une extrémité respective (2a) dudit essieu (2) avec la possibilité de tourner autour dudit axe de direction (B) correspondant.

4. Ensemble selon une ou plusieurs des revendications précédentes, **caractérisé en ce que** lesdits moyens (4) comprennent deux motoréducteurs (11), configurés pour actionner la rotation mutuellement indépendante de chacune desdites roues (3) autour de l'axe de direction (B) respectif.

5. Ensemble selon la revendication 3, **caractérisé en ce que** lesdites manivelles (6) comprennent des plaques profilées respectives (12), qui présentent les mêmes dimensions et la même forme et sont ancrées auxdits pivots correspondants (10).

6. Ensemble selon l'une ou plusieurs des revendications précédentes, **caractérisé en ce que** lesdites tringleries (9) comprennent des bras respectifs (13) qui sont courbés en forme de V, présentent les mêmes dimensions et la même forme, et sont couplés de manière rotative, au moyen de parties d'extrémité respectives, audit coulisseau (7) et à une manivelle correspondante (6).

7. Ensemble selon une ou plusieurs des revendications précédentes, **caractérisé en ce que** ladite glissière (8) est un guide-rouleaux linéaire.

8. Ensemble selon une ou plusieurs des revendications précédentes, **caractérisé en ce qu'**il comprend un codeur (14), configuré pour l'acquisition d'une donnée relative à la position angulaire prise instant par instant par l'une desdites roues (3) par rapport audit axe de direction (B) correspondant.

9. Ensemble selon la revendication 8, **caractérisé en ce qu'**il comprend un premier élément denté (15), qui tourne solidairement avec ladite roue (3) respective autour dudit axe de direction (B) correspondant, ledit codeur (14) comprenant un deuxième élément denté (16) qui engrène avec ledit premier élément denté (15), le rapport de transmission entre la vitesse angulaire dudit premier élément denté (15), qui est menant, et la vitesse angulaire dudit deuxième élément denté (16), qui est mené, étant supérieur à un.

10. Véhicule de travaux automoteur, comprenant au moins un châssis, **caractérisé en ce qu'**il comprend un ensemble (1) selon une ou plusieurs des revendications précédentes.
